# DEMANDE DE BREVET EUROPEEN

(11) **EP 4 813 945 A1**
(43) Date de publication de la demande: **30.09.2026**
(21) Numéro de dépôt: 26167391.7
(22) Date de dépôt: 24.03.2026
(51) Int. Cl.: C04B 28/00, C04B 28/08

(54) **COMPOSITION DE CHAPE DE MORTIER, CHAPE, BÂTIMENT ET PROCÉDÉ SUR LA BASE D'UNE TELLE COMPOSITION**

(30) Priorité: 24.03.2025 FR 2502978
(71) Demandeur: Chapes Coutinho, 78500 Sartrouville (FR)
(72) Inventeur: COUTINHO, Tomy, 78500 SARTROUVILLE (FR)
(74) Mandataire: Tzeuton Tchangoum, Eric Olivier

(57) **Abrégé**

L'invention concerne une composition de mortier de chape comprenant, pour 260 à 280L, de préférence 270L de composition :
- de 230 à 250 L, de préférence de 235 à 245L de sable silico-calcaire ;
- de 40 à 60 kg, de préférence de 45 à 50 kg de ciment décarboné pauvre en clinker, comprenant des métakaolins ;
- de 300 à 380 ml, de préférence de 310 à 330 ml d'adjuvant de type liants ;
- de l'eau en quantité suffisante pour 260 à 280L, de préférence 270L de composition,
ces composants étant mélangés et la composition de mortier de chape étant solidifiée de sorte à obtenir une chape de mortier.

La chape de mortier obtenue a une résistance à l'arrachement comprise entre 0,8 et 1,5 MPa, de préférence de 1 MPa.

L'invention permet de réaliser une chape de mortier bas carbone.

## Description

L'invention concerne le domaine des compositions de ciments de chapes à base de mortier de ciment.

Dans ce domaine, le ciment généralement utilisé est le ciment dit de Portland CEM II 32,5R. Ce ciment est fait à base de clinker (50-70%) ce qui fait qu'il est très énergivore. Cela implique est un gros inconvénient d'un point de vue écologique.

Outre le clinker, ce ciment comprend environ 20% de laitier issu de l'industrie du fer, également très énergivore.

Ainsi, les chapes de mortier utilisant du ciment de Portland impliquent un bilan carbone négatif qui nécessite des améliorations.

D'autres parties des constructions ou d'autres chapes sont basées sur du béton comprenant en outre du gravier, ce qui n'est pas le cas des chapes de mortier objet de l'invention. Le gravier impacte grandement ce type de composition d'un point de vue des propriétés physiques/mécaniques, ce qui fait que pour une chape de mortier, les ingrédients et leurs proportions doivent être affinées pour arriver aux propriétés physiques/mécaniques désirées.

Des solutions ont été proposées pour fournir un ciment plus écologique (dit ciment bas carbone ou décarboné) tel que le ciment H-UKR proposé par la société HOFFMANN GREEN CEMENT TECHNOLOGIES. Il s'agit d'un ciment mélangé à froid, ce qui limite les dépenses énergétiques et le rend écologique.

Outre le ciment, la fabrication du mortier de chape nécessite des éléments supplémentaires, notamment des sables, des adjuvants accélérateurs de prise et de séchage (pas de gravier contrairement aux chapes de béton) ; ainsi que de l'eau dans des proportions spécifiques.

Malheureusement, le ciment décarboné usuel présente des propriétés physiques/mécaniques différentes de celles du ciment de Portland, ce qui implique d'avoir des proportions très spécifiques des différents composants.

Par ailleurs, les compositions comportent généralement des fibres de polypropylène anti-fissuration superficielle pour la tenue mécanique de la chape.

Certains adjuvants sont proposés mais indiqués pour des ciments de Portland, non pour les ciments décarbonés.

De plus, dans le domaine des chapes de mortier, il importe que la chape obtenue ait une résistance à l'arrachement comprise entre 0,5 à 1,5 (pour les locaux de type P 4S, cas particulier) usuellement 0,6 MPa pour la pose de revêtements collés, de préférence d'environ 0,8 MPa ; et une prise de 1 cm tous les 8 jours. Cette contrainte mécanique est importante pour faciliter l'adhésion du revêtement posé sur la chape de mortier (colle de carrelage ou autre). En effet, à une résistance à l'arrachement de moins de 0,5 MPa, cette dernière n'auras pas la cohésion superficielle suffisante pour supporter une colle de revêtement de sol (type carrelage ou parquet), et devient poreuse. Avec une résistance supérieure à plus de 1,5 MPa, la chape sèche trop vite, ce qui va générer de la fissuration. Il faut alors réparer, voire déposer la chape.

Ainsi, les chapes de mortier utilisant le ciment décarboné proposé dans l'art antérieur, ont une résistance à l'arrachement de plus de 1,5 MPa, ce générera les mêmes problématiques.

Ces ciments décarbonés nécessitent un affinage poussé des ingrédients, et leur mélange pour arriver à une chape de mortier ayant des propriétés physiques/mécaniques requises.

Un objectif de l'invention est de remédier aux défauts de l'art antérieur et de proposer une composition de mortier de chape permettant d'obtenir une chape avec les propriétés physiques/mécaniques requises y compris une résistance à l'arrachement entre 0,5 et 1,5MPa.

Pour atteindre cet objectif, l'invention propose une composition de mortier de chape comprenant, pour 260 à 280L, de préférence 270L de composition :
- de 230 à 250 L, de préférence de 235 à 245L de sable silico-calcaire ;
- de 40 à 60 kg, de préférence de 45 à 50 kg de ciment décarboné comprenant des métakaolins ;
- de 300 à 380 ml, de préférence de 310 à 330 ml d'adjuvant de type liants ;
- de l'eau en quantité suffisante pour 260 à 280L, de préférence 270L de composition,
ces composants étant mélangés et la composition de mortier de chape étant solidifiée de sorte à obtenir une chape de mortier.

Plus particulièrement, lesdits composants sont mélangés et la composition de mortier de chape est solidifiée de sorte à obtenir une chape de mortier, de sorte que la chape obtenue a une résistance à l'arrachement comprise entre 0,5 et 1,5 MPa, de préférence entre 0,5 et 1,2 MPa, plus préférentiellement entre 0,8 et 1 MPa.

Le sable est de préférence du sable ayant une granulométrie de 0/5, de préférence 0/4, c'est-à-dire des tailles de grains entre 0 et 5 ou 4 mm.

En particulier, la chape de mortier obtenue présente une résistance à l'arrachement comprise entre 0,5 et 1,5 MPa, de préférence de 1 MPa.

Avantageusement, la composition selon l'invention permet d'avoir de bonnes propriétés physiques/mécaniques, une élasticité acceptable, et pleinement utilisable en tant que chape de mortier. De plus, l'adhérence des revêtements est satisfaisante avec cette composition.

Avec 250 ml d'adjuvants ou moins, le temps de séchage est trop long, la chape n'a pas une bonne tenue mécanique et se désagrège de sorte qu'il faut la déposer et recommencer. Le liant permet de mieux fixer le ciment au sable sans que la chape ne soit non plus trop rigide.

Selon une variante préférée, la composition de mortier de chape comprend :
- de 240 L de sable silico-calcaire de granulométrie 0/4 ;
- de 50 kg de ciment décarboné comprenant des métakaolins ;
- de 320 ml d'adjuvant de type liants.

Cela permet d'avoir des propriétés physiques/mécaniques idéales, et une adhésion parfaite des revêtements posés sur la chape.

Selon une variante, le ciment décarboné est un ciment H-UKR. Ce ciment est commercialisé par la société HOFFMANN GREEN CEMENT TECHNOLOGIES.

Cela permet d'utiliser du ciment bas carbone disponible dans le commerce de sorte à formuler la composition rapidement.

Selon une variante, l'adjuvant est un Rétanol Xtreme^{TM} ou un adjuvant analogue à plus de 80% des composants. Il s'agit de préférence d'un adjuvant de la marque Rétanol Xtreme^{TM}.

Cela permet d'utiliser un adjuvant disponible dans le commerce de sorte à formuler la composition rapidement.

L'invention porte en outre sur un kit de réalisation d'au moins une composition de mortier de chape selon l'invention, comprenant une machine électrique de mélange.

Cela permet d'être encore plus écologique dans la réalisation de la chape de mortier.

Un autre objet de l'invention concerne une chape de mortier comprenant une composition de mortier de chape selon l'invention.

Cela permet de réaliser une chape bas carbone.

L'invention a en outre trait à un bâtiment comprenant une chape de mortier qui comprend une composition de mortier de chape selon l'invention.

Cela permet de réaliser un bâtiment bas carbone.

L'invention porte également sur un procédé de fabrication d'une chape de mortier, comprenant une étape de mélange des composants d'une composition de mortier de chape selon l'invention, une étape d'application de la composition et une étape de séchage.

L'invention sera davantage détaillée ci-dessous, sur la base de modes de réalisation particuliers non-limitatifs.

L'invention concerne une composition de mortier de chape bas carbone, permettant de proposer une chape de mortier bas carbone comprenant peu ou pas de clinker.

L'invention concerne une chape de mortier de type humide mélangée sur le chantier, et nivelée sur site par un opérateur.

L'invention permet d'avoir un meilleur bilan carbone que les solutions de l'art antérieur.

La composition de mortier pour les chapes de l'invention est basée sur un ciment décarboné pauvre en clinker, comprenant des métakaolins. Ce ciment comprend moins de 10% de clinker, plus particulièrement 0% de clinker.

La composition comprend, pour 260 à 280L, de préférence 270L de composition, de préférence de 45 à 50 kg de ce ciment décarboné. La composition idéale comprend 50 kg de ciment décarboné lorsqu'on utilise une cuve de 270L (300L de capacité totale). Dans la variante préférée, il s'agit d'un ciment H-UKR de la société HOFFMANN GREEN CEMENT TECHNOLOGIES.

La composition de mortier comprend en outre du sable, de préférence du sable silico-calcaire. Il y a en particulier de 235 à 245L de sable silico-calcaire pour ladite cuve. La composition idéale comprend 240L de sable silico-calcaire.

De manière surprenante, l'inventeur s'est aperçu que des granulométries entre 0 et 4mm permettent d'obtenir une composition fonctionnelle tandis que l'art antérieur concernant les chapes prévoit généralement du sable entre 08-1,2. Ainsi, dans l'invention, l'utilisateur a moins de besoin de filtration et de pertes de sable de grains de tailles entre 1,21 et 5mm.

Le sable est de préférence du sable ayant une taille de grains de 0,4 mm. Avantageusement, cela permet d'avoir une composition optimale pour les applications de chapes dans le cadre de l'invention. Le sable est en particulier lavé avant d'être utilisé.

De plus, la composition de mortier comprend des adjuvants de type liants, tels que de préférence l'adjuvant Rétanol Xtreme^{TM}. En particulier, il y a de 310 à 330 ml d'adjuvant de type liants pour ladite cuve. La composition idéale comprend 320 ml d'adjuvant de type liants.

Les adjuvants du commerce sont vendus en bidons de 20L par exemple. Les dosages conseillés sont de 5 à 6,5 ml/kg de ciment. L'invention propose un dosage de préférence entre 4 et 7,5 ml/kg de ciment. Avantageusement, l'invention implique moins de précision ce qui fait qu'un outil de mesure/prélèvement plus approximatif peut être utilisé dans le cadre du procédé, et permettre d'obtenir néanmoins une composition fonctionnelle.

Les composants susvisés étant mélangés à de l'eau en quantité suffisante pour 270L de composition dans ladite cuve. La chape est ensuite transportée dans lieux de pose et les étages pour être appliquée avant de se solidifier. De manière surprenante, la chape obtenue a une résistance à l'arrachement comprise entre 0,5 et 1,2 MPa, de préférence de 0.8 MPa. Ces caractéristiques sont liées à la formulation spécifique et les proportions de mélange utilisées, y compris les quantités de sable et d'eau.

L'antérieur concernant les chapes prévoit généralement des résistances à la compression au-dessus de 15 MPa, et une adhérence à 2 MPa. Ainsi, la chape de l'art antérieur sèche trop vite, et génère des fissurations qui ne sont pas présentes avec les compositions de l'invention au même stade. Ces fissurations nécessitent ultérieurement des réparations de la chape de l'art antérieur, voire une dépose dans certains cas.

La chape est réalisée avec un dispositif de convoyage de la composition, de type électrique. Ainsi, l'invention porte en outre sur un kit de réalisation d'au moins une composition de mortier de chape telle que décrite précédemment comprenant une machine électrique de mélange et convoyage. Il s'agit en particulier d'un malaxeur-pompe électrique, permettant d'éviter d'utiliser du gasoil non routier de l'art antérieur. Cette machine réalise le mélange du mortier, et sa la mise sous pression par un compresseur pour l'envoyer dans les étages et l'appliquer avant de le lisser.

La machine électrique permet d'avoir un procédé encore plus écologique.

La chape de mortier obtenue est également un autre aspect de l'invention car il s'agit d'une chape bas carbone. Il en est de même pour le bâtiment obtenu.

L'invention concerne en outre un procédé de fabrication d'une chape de mortier sur la base de la composition décrite ci-dessus.

Le procédé comprend une étape de mélange des composants de ladite composition de mortier de chape, en particulier avec une machine de mélange électrique.

Le procédé comprend en outre une étape d'application de ladite composition, puis une étape de séchage.

## Revendications

1. Composition de mortier de chape comprenant, pour 260 à 280L, de préférence 270L de composition :
- de 230 à 250 L, de préférence de 235 à 245L de sable silico-calcaire ;
- de 40 à 60 kg, de préférence de 45 à 50 kg de ciment décarboné comprenant des métakaolins ;
- de 300 à 380 ml, de préférence de 310 à 330 ml d'adjuvant de type liants ;
- de l'eau en quantité suffisante pour 260 à 280L, de préférence 270L de composition,
ces composants étant mélangés et la composition de mortier de chape étant solidifiée de sorte à obtenir une chape de mortier.

2. Composition de mortier de chape selon la revendication précédente, **caractérisée en ce que** lesdits composants sont mélangés et la composition de mortier de chape est solidifiée de sorte à obtenir une chape de mortier, de sorte que la chape obtenue a une résistance à l'arrachement comprise entre 0,5 et 1,5 MPa, de préférence entre 0,5 et 1,2 MPa, plus préférentiellement entre 0,8 et 1 MPa.

3. Composition de mortier de chape selon la revendication précédente, **caractérisée en ce que** ladite résistance à l'arrachement est de 0,8 MPa.

4. Composition de mortier de chape selon l'une des revendications précédentes, **caractérisée en ce que** ledit sable a une granulométrie de 0/5, de préférence 0/4.

5. Composition de mortier de chape selon la revendication précédente, **caractérisée en ce que** ledit sable a une taille de grains de 0,4 mm.

6. Composition de mortier de chape selon l'une des revendications précédentes, **caractérisée en ce qu'**elle comprend :
- de 240 L de sable silico-calcaire de granulométrie 0/4 ;
- de 50 kg de ciment décarboné comprenant des métakaolins ;
- de 320 ml d'adjuvant de type liants.

7. Composition de mortier de chape selon l'une des revendications précédentes, **caractérisée en ce que** le ciment décarboné est un ciment H-UKR.

8. Composition de mortier de chape selon l'une des revendications précédentes, **caractérisée en ce que** l'adjuvant est un Rétanol Xtreme^{TM}.

9. Kit de réalisation d'au moins une composition de mortier de chape selon l'une des revendications précédentes, comprenant une machine électrique de mélange.

10. Chape de mortier comprenant une composition de mortier de chape selon l'une des revendications 1 à 8.

11. Bâtiment comprenant une chape de mortier qui comprend une composition de mortier de chape selon l'une des revendications 1 à 8.

12. Procédé de fabrication d'une chape de mortier, comprenant une étape de mélange des composants d'une composition de mortier de chape selon l'une des revendications 1 à 8, une étape d'application de la composition et une étape de séchage.
